Europäisches Patentamt

European Patent Office

Office européen des brevets

(19)

(11) EP 0 558 522 B1

## (12) FASCICULE DE BREVET EUROPEEN

(45) Date de publication et mention
de la délivrance du brevet:
**03.07.1996 Bulletin 1996/27**

(21) Numéro de dépôt: **91919431.6**

(22) Date de dépôt: **20.11.1991**

(51) Int Cl.6: **C01F 5/16**, C01F 11/02,
C04B 2/06, B01D 53/34

(86) Numéro de dépôt international:
**PCT/BE91/00082**

(87) Numéro de publication internationale:
**WO 92/09528 (11.06.1992 Gazette 1992/13)**

(54) **HYDROXYDE DE CALCIUM ET/OU DE MAGNESIUM, SA PREPARATION ET SON UTILISATION**

KALZIUM- UND/ODER MAGNESIUMHYDROXID, VERFAHREN ZU DESSEN HERSTELLUNG UND DESSEN ANWENDUNG

METHOD FOR PREPARING CALCIUM AND/OR MAGNESIUM HYDROXIDE, AND USE THEREOF

(84) Etats contractants désignés:
**AT BE CH DE DK ES FR GB GR IT LI LU NL SE**

(30) Priorité: **21.11.1990 BE 9001102**
**21.11.1990 US 616784**

(43) Date de publication de la demande:
**08.09.1993 Bulletin 1993/36**

(73) Titulaire: **LHOIST RECHERCHE ET
DEVELOPPEMENT S.A.
B-1342 Ottignies-Louvain-La-Neuve (BE)**

(72) Inventeurs:
 • **DUMONT, Philippe, Aimé
 B-1160 Auderghem (BE)**
 • **GOFFIN, Robert
 B-4949 Trooz (BE)**

(74) Mandataire: **De Palmenaer, Roger et al
Bureau Vander Haeghen S.A.
Rue Colonel Bourg 108 A
1040 Bruxelles (BE)**

(56) Documents cités:
 **EP-A- 0 177 769          DE-A- 2 031 109
 DE-A- 3 620 024          US-A- 4 464 353**

 • **PATENT ABSTRACTS OF JAPAN, vol. 14, no.
 188 (C-710)[4131], 17 avril 1990 & JP-A-23 45 13,
 5 February 1990**
 • **PATENT ABSTRACTS OF JAPAN, vol. 8, no. 246
 (C-251)[1683], 10 novembre 1984 & JP-A-59 128
 212, 24 July 1984**
 • **ZEMENT-KALK-GIPS, vol. 37, no. 10, 1984,
 Wiesbaden-Biebrich (DE) F. SCHMITZ et al., pp.
 530-533**

## Description

La présente invention est relative à un procédé de préparation d'hydroxyde de calcium et/ou de magnésium.

L'hydroxyde de calcium est de manière connue préparé par extinction de chaux vive ou de dolomie décarbonatée.

Pour obtenir un hydroxyde de calcium dont la teneur en humidité est inférieure à 50%, il est connu pour éviter une étape de séchage coûteuse de faire réagir de la chaux vive avec de l'eau, le rapport en poids eau-chaux étant inférieur à 2. Un hydroxyde de calcium préparé de cette manière a une surface spécifique de l'ordre de 15 à 20 m$^2$/g. Un tel hydroxyde de calcium, vu sa faible surface spécifique, ne permet pas un traitement correct de gaz ou fumées pour lesquels des composés acides doivent être éliminés.

Il est bien connu que la réactivité d'un produit est fonction entre autres, de sa surface spécifique.

L'homme du métier a dès lors essayé d'accroître la surface spécifique de l'hydroxyde de calcium.

Dans un premier procédé pour accroître la surface spécifique de l'hydroxyde de calcium, l'homme du métier a fait réagir de la chaux vive avec de l'eau en présence de méthanol. L'hydroxyde de calcium obtenu par un tel procédé a une surface spécifique généralement comprise entre 17 et 35 m$^2$/g. De plus ce procédé est coûteux et dangereux suite à la production de vapeur de méthanol.

Par le document EP-A-0177769 et l'article Zement-Kalk-Gips, vol. 37, n° 10 (1984), pages 530-533, on connaît la préparation d'hydroxyde de calcium présentant une surface spécifique supérieure à 35 mg$^2$/g et une teneur en humidité inférieure à 50 %.

Le procédé selon EP-A-0177769, utilisé pour la préparation d'hydroxyde de calcium dans l'article Zement-Kalk-Gips, comprend les étapes suivantes :

* mélange d'oxyde de calcium avec une solution contenant 30 à 50 parts en volume d'eau et 50 à 70 parts en volume d'un agent de solubilisation (méthanol) à une température inférieure à 45°C ;
* réaction principale de l'oxyde de calcium avec de l'eau à une température de 50 à 70°C ;
* réaction finale, le rapport en poids oxyde de calcium/solution étant tel que la température lors de cette réaction finale est comprise entre 85 et 110°C, et
* élimination des traces d'alcool encore présent dans l'hydroxyde de calcium.

Dans un autre procédé (voir DE-A-3620024) l'homme du métier a proposé de transformer de la chaux vive en hydroxyde de calcium par réaction avec de l'eau en présence d'un additif pour accroître la surface spécifique et d'un additif pour accroître la fluidité. L'additif pour accroître la surface spécifique est choisi parmi les alcools, le sucre, etc, tandis que l'additif pour accroître la fluidité est choisi parmi les glycols, amines et/ou autres produits favorisant le broyage.

Dans l'unique exemple que contient le document DE-A-3620024, 100 parts en poids de chaux vives finement divisées ont été mélangés à 70 parts en poids d'eau, 1 part en poids de propylène glycol et 2 parts en poids de mélasse.

La reproduction de cet exemple a montré que l'hydroxyde de calcium ainsi préparé avait une surface spécifique inférieure à 35 m$^2$/g.

On connaît enfin par le document DE-A-2031109 un additif pour modifier la chaux vive lors de son broyage pour la préparation de mortier. L'additif est utilisé à raison de 0,05 à 0,1% en poids par rapport à la chaux vive. Dans le seul exemple de ce document, l'additif est une solution contenant 30 % de triéthanolamine.

Ce document n'enseigne pas qu'il est possible d'obtenir un accroissement de surface spécifique de l'hydroxyde de calcium grâce à l'utilisation de quantité minimale d'additif déterminé.

Le demandeur a découvert de façon surprenante qu'en utilisant des additifs particuliers connus comme étant des additifs pour accroître la fluidité, il était possible d'obtenir un hydroxyde de calcium présentant une surface spécifique supérieure à 35 m$^2$/g, voire 40 m$^2$/g et même 50 m$^2$/g.

La présente invention a donc pour objet un procédé de préparation d'un hydroxyde de calcium dont la teneur en humidité est inférieure à 50 %, de préférence inférieure à 15 %, cet hydroxyde présentant une surface spécifique supérieure à 35 m$^2$/g, de préférence comprise entre 45 et 80 m$^2$/g.

Le procédé de la présente invention est un procédé pour la préparation d'un hydroxyde de calcium et/ou de magnésium. Selon ce procédé de préparation, on fait réagir du CaO et/ou MgO avec une quantité d'eau telle que l'hydroxyde de calcium et/ou de magnésium présente une teneur en humidité inférieure à 50% et en présence d'une quantité d'un additif choisi parmi l'éthylène glycol, le diéthylène glycol, le triéthylène glycol, la monoéthanolamine, la diéthanolamine, la triéthanolamine et leurs mélanges, la quantité d'additif étant telle que la surface spécifique soit supérieur à 35 m$^2$/g, de préférence à 40 m$^2$/g, cette quantité étant telle que le rapport en poids additif/CaO et/ou MgO est supérieur à 0.002 : 1.

Selon une particularité, on utilise une quantité d'eau telle que le rapport en poids eau/CaO ou/et MgO est compris entre 0,6 : 1 et 2 : 1, de préférence entre 0,7 : 1 et 1,5 : 1.

Toutefois, de façon avantageuse, on utilise une quantité d'eau telle que le rapport en poids eau/CaO et/ou MgO est compris entre 0,8 : 1 et 1,2 : 1, de préférence entre 0,9 : 1 et 1,1 : 1. Selon une autre particularité du procédé suivant l'invention on utilise avantageusement une quantité dudit additif telle que le rapport en poids additif /CaO et/ ou MgO est supérieur à 0,004 : 1 et inférieur à 0,03 : 1 et est de préférence compris entre 0,005 : 1 et 0,02 : 1.

L'hydroxyde de calcium et/ou de magnésium obtenu par le procédé décrit ci-avant peut si nécessaire être soumis à un séchage pour abaisser la teneur en humidité, voire à obtenir un hydroxyde sec.

Vu la haute surface spécifique de l'hydroxyde de calcium et/ou de magnésium selon l'invention et donc sa très haute réactivité, on peut injecter l'hydroxyde de calcium et/ou de magnésium, en particulier un hydroxyde de calcium, préparé par un procédé suivant l'invention, dans des gaz ou fumées a traiter de manière à en éliminer des composés acides, des oxydes de soufre, de l'acide chlorhydrique, etc.

Selon ce procédé selon l'invention, le produit de la réaction CaO et/ou MgO - $H_2O$ est avantageusement soumis à un broyage par voie humide.

Dans une forme de réalisation particulière du procédé, le broyage par voie humide est effectué au moins lors de la réaction CaO et/ou MgO - $H_2O$.

D'autres particularités et détails de l'invention ressortiront de la description détaillée suivante dans lequelle il est fait référence aux exemples de préparation et d'utilisation suivants :

Exemple 1

Dans cet exemple, différents hydroxydes de calcium ont été utilisés dans le traitement de fumées.

Les fumées traitées provenaient d'une centrale thermique (puissance 2,5 MW) dans laquelle un charbon présentant une teneur en soufre de 1,4% a été brûlé. Cette centrale comprenait un brûleur à grille (le charbon à brûler étant placé sur ladite grille), un échangeur de chaleur pour récupérer l'énergie produite dans le brûleur, des cyclones pour éliminer des cendres volantes hors des gaz et une colonne dans laquelle de l'hydroxyde de calcium était injecté pour éliminer des fumées du $SO_2$ et de l'HCl. Cette colonne était située entre l'échangeur de chaleur et un filtre pour récupérer des particules solides telles que hydroxyde de calcium restant, dérivés de calcium tels que sulfate de calcium, poussières, etc. Les fumées contenaient de 1600 à 1900 (valeur moyenne 1800) mg $SO_2/m^3$.

Pour les tests relatifs à l'élimination de HCl des fumées, le charbon utilisé avait une très faible teneur en soufre et de l'HCl était injecté dans le brûleur de manière à obtenir des fumées contenant 1450 - 1800 mg $HCl/m^3$ (valeur moyenne : 1600 mg $HCl/m^3$).

Dans les tests effectués, le débit total de gaz de la centrale était compris entre 3200 et 4900 $Nm^3/h$. La température des fumées mises en contact avec l'hydroxyde de calcium injecté dans la colonne était d'environ 115°C, tandis que le temps de contact entre les fumées et l'hydroxyde de calcium injecté était d'environ 3,7 et 5,6 secondes. La teneur en $SO_2$ et HCl des fumées a été mesurée avant et après le contact de celles-ci avec l'hydroxyde de calcium.

Soit $[HCl]_o$ et $[SO_2]_o$ les teneurs en HCl et $SO_2$ des fumées avant traitement et $[HCl]_f$ et $[SO_2]_f$ les teneurs en HCl et $SO_2$ des fumées après traitement, les rendements en % peuvent être calculés comme suit :

$$\frac{[HCl]_o - [HCl]_f}{[HCl]_o} \times 100 \text{ pour la déchloration}$$

$$\frac{[SO_2]_o - [SO_2]_f}{[SO_2]_o} \times 100 \text{ pour la désulfuration}$$

Le rendement du traitement dépend de la quantité d'hydroxyde de calcium utilisée par rapport à la quantité de $SO_2$ ou HCl présent dans les fumées c'est-à-dire du rapport moléculaire Ca : S ou Ca : 2 HCl.

Dans ces essais, les hydroxydes de calcium suivants ont été utilisés.

Hydroxyde de calcium A

On a fait réagir de la chaux vive moulue avec une quantité d'eau correspondant à un rapport eau/chaux de 0,58 : 1. L'hydroxyde de calcium ainsi obtenu avait une teneur en humidité de 0,8% et une surface spécifique de 17 $m^2/g$. L'hydroxyde de calcium ainsi que la vapeur produite lors de la réaction d'extinction ont été injectés à une température de 90 - 100°C dans les fumées.

Hydroxyde de calcium B

On a fait réagir de la chaux vive moulue avec de l'eau, le rapport eaux/chaux étant de 0,5, en présence de diéthylène glycol. Le rapport en poids diéthylène glycol/chaux était de 0,001. On a ainsi obtenu un hydroxyde de calcium présentant une surface spécifique de 25 $m^2/g$. Cet hydroxyde, ainsi que la vapeur produite lors de l'extinction ont été injectés à 90 - 100°C dans les fumées.

Hydroxydes de calcium C

On a éteint de la chaux vive moulue avec 0,83 part en poids d'eau par part en poids de chaux vive en présence de 0,008 part en poids de diéthylène glycol par part en poids de chaux vive.

L'hydroxyde de calcium obtenu avait une teneur en humidité de 12% et une surface spécifique de 46 $m^2$/g. L'hydroxyde de calcium et la vapeur produite ont été injectés à une température de 90 - 100°C dans les fumées.

Le tableau 1 suivant donne les rendements de désulfuration et de déchloration pour les hydroxydes de calcium A, B et C en fonction du rapport Ca : S ou Ca : HCl.

TABLEAU 1

| hydroxyde de calcium | rendement de désulfuration (%) | | | rendement de déchloration (%) | | |
|---|---|---|---|---|---|---|
| | Ca : S | | | Ca : HCl | | |
| | 1:1 | 2:1 | 3:1 | 1:2 | 2:2 | 3:2 |
| A | 24 | 33 | 39 | 33 | 46 | 54 |
| B | 37 | 58 | 63 | 41 | 60 | 73 |
| C | 47 | 81 | 88 | 58 | 83 | 96 |

Il ressort de ce tableau que l'hydroxyde de calcium C selon l'invention permet d'obtenir des rendements de désulfuration ou de déchloration importants même si le rapport Ca : S ou Ca : 2HCl reste limité.

Un rendement élevé permet une meilleure utilisation de l'hydroxyde de calcium, c'est-à-dire l'utilisation d'une quantité moindre d'hydroxyde de calcium pour obtenir un résultat de désulfuration ou de déchloration déterminé, c'est-à-dire que le filtre, pour un résultat de désulfuration ou de déchloration déterminé, doit récupérer une quantité moindre de particules.

Les meilleurs rendements obtenus au moyen de l'hydroxyde de calcium selon l'invention semblent être dus non seulement à l'accroissement de la surface spécifique mais également à l'accroissement de la porosité de l'hydroxyde de calcium, ainsi qu'à un accroissement du diamètre des pores. Ainsi la pénétration du $SO_2$ dans les pores de l'hydroxyde de calcium est accrue et favorise de la sorte l'absorption du $SO_2$.

**Exemple 2**

On a préparé un lait de chaux en mélangeant 50g de chaux vive pulvérulente de granulométrie inférieure à 90 microns et à haute réactivité (obtenue par calcination douce à 900°C dans un four rotatif) avec 600g d'eau chaude (température 80°C) contenant X% en poids d'un additif par rapport au poids de CaO. La chaux vive utilisée avait une pureté d'environ 98%.

Après quelques minutes de réaction, la température du mélange était proche de 100°C.

On a ensuite filtré le lait de chaux ainsi formé et on a séché le produit ainsi récupéré à 70°C et sous vide.

Dans une variante du procédé décrit ci-avant, on a soumis, avant les opérations de filtration et de séchage , le mélange à un broyage par voie humide. Pour effectuer ce broyage on a utilisé un broyeur rotatif de laboratoire DYNO-MILL d'une capacité de 1,4 1 et dont les corps broyants étaient des sphères ayant un diamètre compris entre 0,125 et 0,8mm et réalisées en oxyde de zirconium. La vitesse de rotation du broyeur était de 3400 tours/minute tandis que le temps de boyage était inférieur à 1 minute.

A titre d'exemple comparatif, on a préparé un lait de chaux, sans utilisation d'amine et/ou de glycol, de la manière décrite ci-dessus.

On a mesuré par la méthode BET la surface spécifique des micelles de lait de chaux après séchage.

Le tableau ci-après reprend les paramètres et les résultats (surface spécifique) des laits de chaux obtenus par les procédés décrits ci-avant.

TABLEAU II

| Additif | Surface spécifique $m^2$/g | |
|---|---|---|
| | pas de broyage par voie humide | broyage par voie humide |
| 0 | 28,3 | 31,2 |
| 0,5% diéthylèneglycol | 35,7 | 46,7 |
| 1% diéthylèneglycol | 39,1 | 63,9 |
| 0,5% triéthanolamine | 40,3 | 58,4 |

TABLEAU II   (suite)

| Additif | Surface spécifique m$^2$/g | |
|---|---|---|
| | pas de broyage par voie humide | broyage par voie humide |
| 1% triéthanolamine | 48,5 | 67,9 |

La teneur du mélange en diéthyèneglycol ou triéthanolamine exprimé en % en poids par rapport au poids de Ca(OH)$_2$ peut se déterminer par la formule :

$$X \cdot \frac{56}{74}$$

dans laquelle

X est le % en poids d'additifs par rapport au poids de CaO

56 et 74 sont respectivement le poids d'une mole de CaO et de Ca(OH)$_2$.

Ainsi lorsqu'on utilise 0,5% en poids d'un additif par rapport au poids de CaO, le mélange contient environ 0,35% en poids dudit additif par rapport au poids de Ca(OH)$_2$, etc.

Ce tableau montre que l'utilisation de 0,5% et 1% de diéthylèneglycol et de triéthanolamine permet d'une part,

d'accroître la surface spécifique des micelles du mélange avant broyage par rapport à la surface spécifique des micelles d'un mélange préparé par simple réaction de chaux vive du commerce avec de l'eau, et d'autre part d'accroître l'efficacité du broyage par voie humide du mélange.

Le broyage par voie humide d'un mélange préparé par simple réaction d'une chaux vive du commerce avec de l'eau ne permet qu'un accroissement d'environ 10% de la surface spécifique, tandis que le broyage par voie humide d'un mélange obtenu par réaction de chaux vive en présence de 0,5 et 1% de diéthylèneglycol et de triéthanolamine, avec de l'eau permet un accroissement d'environ 45% de la surface spécifique.

Cet exemple montre également que par séchage d'une composition, il est possible d'obtenir un hydroxyde suivant l'invention.

## Exemple 3

On a préparé des pâtes de dolomie hydratée en mélangeant 1 part en poids de dolomie décarbonatée finement moulue (granulométrie inférieure à 90 μ) obtenue par calcination douce de dolomie à 900°C dans un four rotatif et 2,5 parts en poids d'eau contenant éventuellement un additif. La température initiale du mélange était de 80°C (température de l'eau) et une température de ± 100°C était atteinte après quelques minutes, de sorte que la dolomie décarbonatée était complètement hydratée (Ca(OH)$_2$ - Mg(OH)$_2$).

Après séchage de la pâte à une température de 70°C et sous vide, on a mesuré la surface spécifique de particules formant le mélange. Les résultats de ces mesures sont donnés dans le tableau suivant :

TABLEAU III

| | Surface spécifique m$^2$/g |
|---|---|
| pas d'additif | 25 |
| 1% en poids de diéthylène glycol par rapport au poids de CaO - MgO | 35 |
| 1% en poids de triéthanolamine par rapport au poids de CaO-MgO | 45 |

Exemple 4

On a éteint de la chaux vive moulue avec 0,83 part en poids d'eau en présence de Y part en poids de diéthylène glycol. L'hydrate obtenu avait une teneur en humidité de l'ordre de 10% et une surface spécifique reprise dans le tableau suivant :

| Y | surface (BET) m$^2$/g |
|---|---|
| 0,004 | 37 |
| 0,006 | 38,3 |
| 0,008 | 46 |

**Revendications**

1. Procédé de préparation d'un hydroxyde de calcium et/ou de magnésium présentant une surface spécifique supérieure à 35 $m^2$/g et une teneur en humidité inférieure à 50%, dans lequel on fait réagir du CaO et/ou MgO avec de l'eau, caractérisé en ce qu'on fait réagir ledit CaO et/ou MgO avec de l'eau en présence d'un additif choisi parmi l'éthylène glycol, le diéthylène glycol, le triéthylène glycol, la monoéthanolamine, la diéthanolamine, la triéthanolamine et leurs mélanges, le rapport en poids additif/ CaO et/ou MgO étant supérieur à 0,002 : 1.

2. Procédé suivant la revendication 1, caractérisé en ce que le rapport en poids additif/CaO et/ou MgO est compris entre 0,003 : 1 et 0,03 : 1.

3. Procédé suivant la revendication 1, caractérisé en ce que le rapport en poids additif/CaO et/ou MgO est compris entre 0,005 : 1 et 0,02 : 1.

4. Procédé suivant l'une quelconque des revendications 1 à 3, caractérisé en ce qu'on utilise une quantité d'eau telle que le rapport en poids eau/CaO et/ou MgO est compris entre 0,6 : 1 et 2 : 1, de préférence entre 0,7 : 1 et 1,5 : 1.

5. Procédé suivant l'une quelconque des revendications 1 à 3, caractérisé en ce qu'on utilise une quantité d'eau telle que le rapport en poids eau/CaO et/ou MgO est compris entre 0,8:1 et 1,2:1, de préférence entre 0,9:1 et 1,1:1.

6. Procédé suivant l'une quelconque des revendications 1 à 3, caractérisé en ce qu'on utilise une quantité d'eau telle que le rapport eau/CaO et/ou MgO est supérieur à 2, de manière à obtenir une composition sous forme de lait ou pâte avec une teneur en humidité supérieure à 50 % en poids, et en ce qu'on sèche ladite composition à 70°C et sous vide, de manière à obtenir un hydroxyde de calcium et/ou de magnésium présentant une surface spécifique supérieure à 35 $m^2$/g, et une teneur en humidité inférieure à 50%.

7. Procédé suivant la revendication 6, caractérisé en ce qu'on soumet le produit de la réaction CaO et/ou MgO-$H_2O$, éventuellement pendant ladite réaction, à un broyage par voie humide.

8. Procédé suivant la revendication 1 pour la préparation d'hydroxyde de calcium, caractérisé en ce que le rapport en poids eau/chaux est de 0.83.

9. Procédé suivant la revendication 8, caractérisé en ce que le rapport en poids additif/chaux vive est de 0,008 : 1.

**Claims**

1. Method for the preparation of a calcium and/or magnesium hydroxide having a specific surface area above 35 $m^2$/g and a moisture content below 50 %, in which CaO and/or MgO is reacted with water, characterized in that the said CaO and/or MgO is reacted with water in the presence of an additive selected from among ethylene glycol, diethylene glycol, triethylene glycol, monoethanolamine, diethanolamine, triethanolamine and mixtures thereof, the weight ratio of additive/CaO and/or MgO being greater than 0.002:1.

2. Method according to claim 1, characterized in that the weight ratio of additive to CaO and/or MgO is between 0.003:1 and 0.03:1.

3. Method according to claim 1, characterized in that the weight ratio of additive to CaO and/or MgO is between 0.005:1 and 0.02:1.

4. Method according to anyone of the claims 1 to 3, characterized in that a quantity of water such that the ratio of water to CaO and/or MgO by weight is between 0.6:1 and 2:1, preferably between 0.7:1 and 1.5:1, is used.

5. Method according to anyone of the claims 1 to 3, characterized in that a quantity of water such that the ratio of water to CaO and/or MgO by weight is between 0.8:1 and 1.2:1, preferably between 0.9:1 and 1.1:1, is used.

6. Process according to anyone of claims 1 to 3, characterized in that a quantity of water such that the ratio of water to CaO and/or MgO is higher than 2 is used so as to obtain a composition in the form of a milk or a slurry with a moisture content above 50 % by weight and in that the said composition is dried so as to obtain a calcium and/or magnesium hydroxide having a specific surface area higher than 35 m$^2$/g and a moisture content lower to 50 %.

7. Process according to claim 6, characterized in that the CaO and/or MgO-H$_2$O reaction product is, possibly during the reaction, subjected to a wet grinding.

8. Process according to claim 1 for the preparation of calcium hydroxide, characterized in that the weight ratio water/quicklime is 0.83.

9. Process according to claim 8, characterized in that the weight ratio additive/quicklime is 0.008:1.


**Patentansprüche**

1. Verfahren zur Herstellung eines Calcium- und/oder Magnesiumhydroxids mit einer spezifischen Oberfläche von mehr als 35 m$^2$/g und einem Feuchtigkeitsgehalt von weniger als 50 %, bei dem man CaO und/oder MgO mit Wasser umsetzt, dadurch gekennzeichnet, daß man das CaO und/oder MgO mit Wasser in Gegenwart eines Zusatzstoffes, ausgewählt aus der Gruppe bestehend aus Ethylenglykol, Diethylenglykol, Triethylenglykol, Monoethanolamin, Diethanolamin, Triethanolamin sowie deren Mischungen umsetzt, wobei das Gewichtsverhältnis von Zusatzstoff zu CaO und/oder MgO größer als 0,002:1 ist.

2. Verfahren nach Anspruch 1, dadurch gekennzeichnet, daß das Gewichtsverhältnis von Zusatzstoff zu CaO und/oder MgO zwischen 0,003:1 und 0,03:1 liegt.

3. Verfahren nach Anspruch 1, dadurch gekennzeichnet, daß das Gewichtsverhältnis von Zusatzstoff zu CaO und/oder MgO zwischen 0,005:1 und 0,02:1 liegt.

4. Verfahren nach einem der Ansprüche 1 bis 3, dadurch gekennzeichnet, daß man soviel Wasser verwendet, daß das Gewichtsverhältnis von Wasser zu CaO und/oder MgO zwischen 0,6:1 und 2:1, vorzugsweise zwischen 0,7:1 und 1,5:1, liegt.

5. Verfahren nach einem der Ansprüche 1 bis 3, dadurch gekennzeichnet, daß man soviel Wasser verwendet, daß das Gewichtsverhältnis von Wasser zu CaO und/oder MgO zwischen 0,8:1 und 1,2:1, vorzugsweise zwischen 0,9:1 und 1,1:1, liegt.

6. Verfahren nach einem der Ansprüche 1 bis 3, dadurch gekennzeichnet, daß man soviel Wasser verwendet, daß das Gewichtsverhältnis von Wasser zu CaO und/oder MgO größer als 2 ist, so daß man eine Zusammensetzung in Form einer Milch oder einer Paste mit einem Feuchtigkeitsgehalt von mehr als 50 Gew.-% erhält, und daß man die Zusammensetzung bei 70°C unter Vakuum trocknet, so daß man ein Calcium- und/oder Magnesiumhydroxid mit einer spezifischen Oberfläche von mehr als 35 m$^2$/g und einem Feuchtigkeitsgehalt von weniger als 50% erhält.

7. Verfahren nach Anspruch 6, dadurch gekennzeichnet, daß man das Produkt aus der Umsetzung von CaO und/oder MgO mit H$_2$O, gegebenenfalls während der Umsetzung, einer Naßmahlung unterzieht.

8. Verfahren nach Anspruch 1 zur Herstellung von Calciumhydroxid, dadurch gekennzeichnet, daß das Gewichtsverhältnis von Wasser zu Kalk 0,83 beträgt.

9. Verfahren nach Anspruch 8, dadurch gekennzeichnet, daß das Gewichtsverhältnis von Zusatzstoff zu gebranntem Kalk 0,008:1 beträgt.